# EUROPÄISCHE PATENTSCHRIFT

(11) **EP 0 400 306 B1**
(45) Veröffentlichungstag und Bekanntmachung des Hinweises auf die Patenterteilung: **03.11.1993**
(21) Anmeldenummer: 90106859.3
(22) Anmeldetag: 10.04.1990
(51) Int. Cl.: C01G 25/02

(54) **Zirkondioxidpulver, Verfahren zu seiner Herstellung sowie dessen Verwendung zur Herstellung von Sinterkörpern**
Zirconium dioxide powder, process for its preparation and its use in forming sintered bodies
Poudre de bioxyde de zirconium, procédé pour sa préparation ainsi que son utilisation dans la formation de corps frittés

(30) Priorität: 02.06.1989 DE 3918013
(43) Veröffentlichungstag der Anmeldung: 05.12.1990
(73) Patentinhaber: HÜLS AKTIENGESELLSCHAFT, 45764 Marl (DE)
(72) Erfinder: Scharf, Helmut, Dr., D-2960 Aurich (DE)

(56) Entgegenhaltungen:
- PATENT ABSTRACTS OF JAPAN, Band 11, Nr. 267 (C-443)[2714], 28. August 1987; & JP-A-62 65 932 (NIPPON MINING CO., LTD) 25-03-1987
- PATENT ABSTRACTS OF JAPAN, Band 13, Nr. 457 (C-644)[3805], 16. Oktober 1989; & JP-A-1 176 225 (TORAY IND. INC.) 12-07-1989
- PATENT ABSTRACTS OF JAPAN, Band 10, Nr. 235 (C-366)[2291], 14. August 1986; & JP-A-61 68 314 (AGENCY OF IND. SCIENCE & TECHNOL.) 08-04-1986

## Beschreibung

Zirkondioxid wird in zunehmenden Maße in gegebenenfalls stabilisierter Form als Keramikwerkstoff für Teile eingesetzt, die hohen mechanischen und/oder thermischen Belastungen ausgesetzt sind. Die Stabilisierung der gewünschten ZrO₂-Phasen kann durch Einbau von anderen Oxiden, wie z. B. Y₂O₃ oder CeO₂, CaO und/oder MgO, in das ZrO₂-Gitter erfolgen. Damit die aus dem dotierten ZrO₂ zum Beispiel durch Pressen oder Schlickerguß hergestellten Grünlinge das gewünschte Sinterverhalten und die gesinterten Formkörper die angestrebten guten mechanischen und thermischen Eigenschaften aufweisen, ist es erforderlich, daß das zudosierte Oxid möglichst gleichmäßig in dem ZrO₂-Gitter verteilt ist. Für eine gute pulvertechnologische Verarbeitung sollte das Pulver fließfähig sein, und die Pulverteilchen sollten aus lockeren Agglomeraten bestehen, um eine gute Verpressbarkeit und gute Sinterfähigkeit zu gewährleisten.

ZrO₂-Pulver können aus Baddeleyite (verunreinigtes ZrO₂) oder Zirkon-Sand (ZrO₂ x SiO₂) durch alkalischen Aufschluß mit NaOH oder Na₂CO₃ bei hohen Temperaturen hergestellt werden. Je nach den Mengenverhältnissen und Temperaturbedingungen werden hierbei Na₂ZrO₃ und Na₂SiO₃ und/oder Na₂ZrSiO₅ erhalten. Diese Verbindungen werden hydrolysiert und das erhaltene hydratisierte Zirkonhydroxid zwecks weiterer Reinigung in Schwefelsäure wieder aufgelöst. Anschließend wird mit Ammoniak entweder basisches Zirkonsulfat [Zr₅O₈(SO₄)₂xH₂O] oder basisches Zirkonhydroxid gefällt, die schließlich zu Zirkondioxid calciniert werden. Diese Verfahren sind aufwendig, und die erhaltenen Pulver enthalten relativ große Kristallite, die zu harten Agglomeraten zusammengefügt sind. Daher lassen sich diese Pulver nur schwer zu hochdichten Sinterkörpern verarbeiten.

Einen Prozeß mit weniger Stufen und reinerem ZrO₂ stellt die Umsetzung von Zirkon-Sand mit Chlor in Gegenwart von Kohlenstoff dar. Das hierbei entstehende Zirkontetrachlorid wird mit Wasser zu Zirkonylchlorid umgesetzt, das als Ausgangsverbindung für die Herstellung von ZrO₂-Pulvern dient. Da Zirkonylchlorid (ZrOCl₂ x 8H₂O) in großen Mengen günstig synthetisiert werden kann, stellt es einen wirtschaftlich interessanten Einsatzstoff dar.

Ein häufig angewandtes Verfahren zur Herstellung von ZrO₂-Pulvern auf Basis Zirkonylchlorid besteht in der Umsetzung einer wäßrigen Lösung von Zirkonylchlorid mit einer wäßrigen Lösung von Ammoniak oder einer NH₃-abgebenden Verbindung und Calcinierung des durch Filtration abgetrennten basischen Zirkonhydroxids. Nachteilig bei diesem Verfahren ist, daß die anfallenden Hydroxid-Niederschläge schwer filtrierbar sind und die calcinierten Produkte harte Agglomerate darstellen.

Pulvertechnologisch besser verarbeitbare Pulver werden erhalten, wenn das aus wäßrigen Zirkonylchlorid-Lösungen gefällte Zirkonhydroxid vor der Calcination mit Hilfe einer Azeotropdestillation teilweise entwässert wird. Dieses Verfahren wird zum Teil dadurch abgewandelt, daß das Hydroxid vorher Chlorid-frei gemacht wird, indem zu der Zirkonylchlorid-Lösung Salpetersäure hinzugegeben, der bei der Fällung mit Ammoniak erhaltene Niederschlag in Salpetersäure wieder gelöst und erneut mit Ammoniak gefällt wird. Das erhaltene Zirkonhydroxid wird mit Citronensäure in den entsprechenden organischen Komplex überführt und durch Azeotropdestillation entwässert und anschließend calciniert. Diese Verfahren sind arbeitsintensiv und wegen der Stickoxide umwelbelastend.

Eine Möglichkeit, zu Metalloxid-Pulvern mit annähernd einheitlichen Partikelgrößen im Submikronbereich zu gelangen, besteht in der verschärften Hydrolyse von Metallsalzen in wäßrigen Lösungen bei erhöhten Temperaturen, wie es E. Matijevic in: "Monodispersed Metal (Hydrous) Oxides", Acc. Chem. Res. Vol. 14, 22 - 29 (1981) beschriebt. Bei diesem Verfahren wird die Niederschlagsbilding in einer wäßrigen Lösung so gezielt und kontrolliert durchgeführt, daß nur ein einziger Schub an Kristallkeimen entsteht und die weitere Bildung von Feststoff durch eine diffusionskontrollierte Abscheidung auf den Kristallkeimen erfolgt. Da keine weiteren Kristallkeime gebildet werden, wachsen die ursprünglich erzeugten Kristallkeime zu gleichmäßigen, größeren Partikeln heran. Die Herstellung dieser monodispersen Teilchen kann nur in sehr verdünnten Lösungen erfolgen, und die Hydrolysebedingungen, wie z. B. Salzkonzentration, Art des Anions, pH-Wert-Führung, Temperatur etc., lassen keine größeren Schwankungen zu. Monodisperse ZrO₂-Pulver sind nach dieser Methode bisher nicht hergestellt worden.

In der europäischen Patentschrift 0 251 538 wird ein Verfahren beschrieben, bei dem eine wäßrige Lösung von Zirkonylchlorid über einen längeren Zeitraum bei Temperaturen unterhalb des Siedepunktes des Wassers erwärmt wird. Das sich hierbei bildende Zirkonhydroxid wird von der Lösung abgetrennt und calciniert. Es werden Partikel mit einem Durchmesser von 50 bis 200 nm erhalten. Bei diesem Verfahren ist die Abtrennung der Hydroxid-Partikel von der Lösung sehr schwierig und das erhaltene ZrO₂ ist nicht stabilisiert. Um es zu stabilisieren, müssen die Partikel nach der Calcinierung resuspendiert und durch eine alkalische Fällung mit dem Hydroxid des Stabilisators belegt und nach der Abtrennung von der Lösung erneut calciniert werden. Durch diese zusätzlichen Verfahrensschritte, bei deren Durchführung die Bedingungen exakt eingehalten werden müssen, wird die Verfahrensführung noch schwieriger.

Aus älterer Literatur, z. B. die in Gmelins Handbuch der anorganischen Chemie, 8. Auflage, Band 42 (Zirkon), Seiten 303 bis 306, zitierten Arbeiten, ist bekannt, daß festes ZrOCl₂ x 8H₂O durch starkes Erhitzen unter Agbage von H₂O, HCl und eventuell ZrCl₄ in ZrO₂ umgewandelt werden kann. Diese Methode ist bisher nicht zu einem technischen Verfahren entwickelt worden. Die erhaltenen Produkte stellen keine hochwertigen Pulver dar. Außerdem ist eine nachträgliche, einwandfreie Stabilisierung des ZrO₂ nicht möglich.

Aufgabe der vorliegenden Erfindung war es daher, ein einfaches und kostengünstiges Verfahren zur Herstellung von gegebenenfalls stabilisiertem Zirkondioxidpulver zu entwickeln, das auf die Herstellung von wäßrigen Lösungen und die Abtrennung von Niederschlägen verzichten kann und das zu mikrokristallinen Pulvern führt, welche die gegebenenfalls enthaltenden Stabilisatoren in homogener Verteilung enthalten sowie gute Fließ-, Press- und Sintereigenschaften besitzen.

Diese Aufgabe wird durch die in den Ansprüche beschriebenen Maßnahmen gelöst.

Das erfindungsgemäße Zirkondioxidpulver wird dadurch erhalten, daß man Zirkonylchlorid der Formel ZrOCl₂ x 8H₂O in Gegenwart eines Diols der allgemeinen Formel HO - X - OH, in der X einen gesättigten, linearen oder verzweigten Kohlenwasserstoffrest mit 2 bis 5 Kohlenstoffatomen darstellt, aufschmilzt, Wasser und Chlorwasserstoff ab dampft, das Reaktionsprodukt bei erhöhter Temperatur in einem sauerstoffhaltigen Gas calciniert und den calcinierten Rückstand gegebenenfalls mahlt.

Es wird also von einer Schmelze beziehungsweise Lösung aus möglichst reinem, kristallinem Zirkonylchlorid und dem ausgewählten gesättigten Diol mit nicht geminalen OH-Gruppen ausgegangen. Selbstverständlich kann auch eine Mischung von Diolen der beanspruchten Art eingesetzt werden. Typische einsetzbare Diole sind z. B. Ethan-1,2-diol, Propan-1,2-diol und 2,2-Dimethyl-propan-1,3-diol.

Das Molmengenverhältnis Zirkonylchlorid : Diol kann zwischen 10 : 1 und 1 : 10 schwanken. Prinzipiell können aber auch kleinere und größere Mengen an Diol genommen werden. In beiden Fällen werden jedoch härtere Agglomerate erhalten. Große Diol-Mengen werden Außerdem unwirtschaftlich, da der größte Teil des Diols vor dem Calcinieren durch Destillation wieder abgetrennt werden muß, oder das Diol muß beim Calcinieren verbrannt werden. Bevorzugt sind Molmengenverhältnisse zwischen 6 : 1 und 1 : 1, besonders bevorzugt solche zwischen 5 : 1 und 2 : 1 .

Je nach Einsatzzweck der erfindungsgemäßen bzw. erfindungsgemäß hergestellten Zirkondioxidpulvers kann dieses mehr oder weniger stabilisiert werden. Übliche Stabilisatoren sind z. B. Yttriumoxid (Y₂O₃) und Cerdioxid (CeO₂). Wie bereits eingangs erwähnt, ist es erforderlich, daß die Stabilisatoren möglichst gleichmäßig in dem ZrO₂-Gitter verteilt sind. Sie werden daher als solche oder als sogenannte Precursor den Ausgangsstoffen, vorzugsweise dem Zirkonylchlorid zugemischt. Infragekommende Precursor sind z. B. die Hydroxide, vorzugsweise aber die Chloride der Elemente Yttrium und Cer. Was die Chloride anbetrifft, so können diese mit oder ohne Kristallwasser eingesetzt werden. Das Stabilisatorchlorid wird zweckmäßigerweise durch Mörsern oder Mahlen innig mit dem Zirkonylchlorid gemischt und gemeinsam mit dem Zirkonylchlorid aufgeschmolzen. Da die Weiterverarbeitung des Stabilisatorchlorides gemeinsam mit dem Zirkonylchlorid erfolgt, wird aus Vereinfachungsgründen im folgenden nur vom Zirkonylchlorid die Rede sein. Nach dem Calcinieren liegt das stabilisierende Element ganz oder teilweise in oxidischer Form vor.

Die Menge an Stabilisator, z. B. Yttrium- und/oder Ceroxid, vorzugsweise Yttriumoxid, richtet sich danach, ob teil- oder vollstabilisiertes Zirkondioxidpulver hergestellt werden soll. Für teilstabilisiertes ZrO₂ beträgt die Stabilisatormenge im allgemeinen bis zu 7 Gewichtsprozent, besonders zwischen 0,1 und 6 Gewichtsprozent und ganz besonders zwischen 2 und 5 Gewichtsprozent, bezogen auf das fertige Pulver. Für vollstabilisiertes ZrO₂ liegen die Mengen dagegen zwischen 7 und 15 Gewichtsprozent, vorzugsweise zwischen 8 und 10 Gewichtsprozent, wobei die Grenzen zwischen Voll- und Teilstabilisierung in Abhängigkeit von den übrigen Pulvereigenschaften und den Sinterbedingungen fließend sind.

Das Herstellen der Schmelzen kann auf verschiedenen Wegen erfolgen:
1. Zirkonylchlorid wird für sich alleine aufgeschmolzen. Hierbei löst sich das Salz im eigenen Kristallwasser, und zu dieser Schmelze wird das Diol je nach dem bei Raumtemperatur vorliegenden Aggregatzustand in fester oder flüssiger Form oder als Schmelze hinzugegeben.
2. Das Diol wird als Schmelze vorgelegt und zu dieser Schmelze wird das Zirkonylchlorid in fester Form oder als Schmelze hinzugegeben.
3. Zirkonylchlorid und das bei Raumtemperatur in fester Form vorliegende Diol werden als feste Mischung gemeinsam aufgeschmolzen. Liegt das Diol bei Raumtemperatur in flüssiger Form vor, so wird in Analogie hierzu die entsprechende Suspension soweit erhitzt, bis eine klare Lösung entsteht.

Nach dem Aufschmelzen des Zirkonylchlorids kann die Schmelze einige Zeit unter Rückfluß eines Teils des Kristallwassers und gegebenenfalls eines Teils des Diols temperiert werden, sie kann jedoch auch sofort eingedampft werden. Der Eindampfvorgang kann, vor allem gegen Ende, durch Anlegen eines Vakuums unterstützt werden. Bei dem Eindampfen wird ein Teil des Kristallwassers und des Chlorids in Form von Salzsäure und gegebenenfalls ein Teil des Diols abgedampft. Die Temperatur in der Schmelze bleibt während des Eindampfvorgangs zunächst konstant, um gegen Ende in Abhängigkeit von der Bad- beziehungsweise Ofentemperatur anzusteigen. Das Eindampfen kann durch Durchleiten eines bei den Eindampfbedingungen inerten Gases, wie z. B. Luft oder Stickstoff, weiter beschleunigt werden. Die Bad- oder Ofentemperatur kann während des Eindampfens konstant gehalten oder aber auch gesteigert werden. Die als Pulver vorliegende eingetrocknete Schmelze wird anschließend durch Steigerung der Temperatur in Gegenwart von Luft calciniert.

Die Calciniertemperatur kann je nach der gewünschten Kristallitgröße des ZrO₂ und Härte der Agglomerate in weiten Grenzen schwanken. Die untere Temperaturgrenze wird durch die Bedingung festgelegt, daß der Kohlenstoff der Probe weitestgehend verbrannt sein muß, und die obere Grenze ist bedingt durch den einsetzenden Sintervorgang. Bevorzugt sind Calciniertemperaturen von 600 bis 1000 °C, besonders solche zwischen 600 und 800 °C. Die Calcinierdauer richtet sich nach der Calciniertemperatur. Sie muß so bemessen sein, daß sie bei der jeweiligen Calciniertemperatur ausreicht, den Kohlenstoff annähernd vollständig zu verbrennen. Auch die beim Calcinieren verwendete Menge eines sauerstoffhaltigen Gases, vorzugsweise Luft, muß mindestens so groß sein, daß eine ausreichende Verbrennung des Kohlenstoffs gewährleist ist. Nach dem Calcinieren wird das erhaltene Pulver gegebenenfalls durch Mahlen und eventuell noch Sieben auf die gewünschte Korngröße gebracht.

Das erfindungsgemäße Verfahren kann einstufig durchgeführt werden, indem das Aufschmelzen der Salze und des Diols sowie das Eintrocknen der Schmelze und das Calcinieren des erhaltenen Pulvers in einem einzigen Behälter durchgeführt und die Temperatur des Apparates durch ein entsprechendes Temperaturprogramm gesteuert wird. Es kann jedoch auch mehrstufig erfolgen, indem das Aufschmelzen der Salze und das Eintrocknen der Schmelze in einem Apparat durchgeführt, das erhaltene Pulver einem Mahlschritt unterworfen und anschließend in einem separaten Ofen calciniert wird. Das einstufige Verfahren kann z. B.in einem Trommelofen, des mehrstufige Verfahren in einem Rührbehälter und einem Drehrohrofen durchgeführt werden. Da die Salzschmelze sehr korrosiv ist, müssen für die Apparate entsprechend korrosionsbeständige Materialien verwendet werden, z. B. für den Niedertemperaturbereich Teflon, Glas, Quarz oder Emaille und für den Ofen Aluminiumoxid oder Zirkonoxid.

Die erfindungsgemäßen gegebenenfalls stabilisierten Zirkondioxidpulver besitzen je nach den Herstellbedingungen Kristallitgrößen von ca. 10 bis 60 nm und weisen einen lockeren Aggregatzustand mit einer in der Regel bimodalen Porenverteilung auf. Die Pulver lassen sich gut zu Grünlingen mit hoher Dichte verpressen und führen schließlich zu Sinterkörpern, die im gewünschten Maße mechanisch und thermisch belastbar sind.

Die Erfindung wird anhand der nachfolgenden Beispiele näher erläutert.

Vorab sind die in der Anmeldung benutzten Abkürzungen, Prüf- und Meßverfahren zusammengestellt:

### EDX

Die Elementverteilung in den Proben wurde mit einem handelsüblichen Gerät der Firma EDAX (Typ: EDAX 9900), angeschlossen an ein handelsübliches Rasterelektronenmikroskop, nach der Methode der energiedispersiven Röntgenanalyse (EDX) durchgeführt. Die Auflösung betrug ca. 25 nm.

### REM

Handelsübliches Rasterelektronenmikroskop

### STEM

Handelsübliches Transmissions-Rasterelektronenmikroskop

### Porenstruktur-Verteilung

Die Porenstruktur-Verteilung wurde mit einem handelsüblichen Hg-Hochdruckporosimeter der Firma Carlo Erba untersucht.

### Oberfläche

Die Oberfläche der Pulver wurde mit einem handelsüblichen Gerät nach der BET (Brunauer-Edward-Teller)-Methode (N₂) und mit einem handelsüblichen Hg-Porosimeter der Firma Carlo Erba bestimmt.

### Kristallphase

Die Kristallstruktur wurde mit einem handelsüblichen Gerät mit Hilfe der Röntgenbeugungsanalyse ermittelt.

### Kristalldurchmesser

Der Durchmesser der Kristallite wurde durch Ausmessen der Kristallite in den STEM-Aufnahmen und aus den Einzelpeaks der Röntgenbeugungsaufnahmen erhalten. Als Difraktometer wurde ein handelsübliches Gerät der Firma Philips (Typ: PW 1800) verwendet.

### Sinterverhalten

Die Kinetik des Sinterns der Proben (Längenänderung als Funktion der Temperatur) wurde mit einem handelsüblichen Dilatometer der Fa. Baehr verfolgt.

### Chlorgehalt

Der Chlorgehalt der Proben wurde mit einem handelüblichen Gerät nach der Röntgenfluoreszensmethode bestimmt.

### Härte der Agglomerate

Da es für die Bestimmung der Härte der Agglomerate keine allgemein übliche Methode gibt, wurde sie qualitativ - und nur in Relation der Produkte zueinander - durch Zerreiben der Pulver zwischen zwei Glasscheiben mit den Fingern ermittelt.

### Beispiel 1

1000,0 g Zirkonylchlorid (ZrOCl₂ x 8H₂O), 51,3 g Yttriumtrichlorid (YCl₃ x 6H₂O) und 80,8 g 2,2-Dimethylpropan-1,3-diol werden in einem rotierenden Glaskolben bei einer Badtemperatur von 140 °C aufgeschmolzen und 15 Minuten unter Rückfluß der entweichenden Salzsäure auf dieser Temperatur gehalten. Anschließend wird die Schmelze durch Wegnahme des Rückflusses bis zur Trockne eingedampft. Gegen ende des Eindampfvorganges wird ein Vakuum von 5 kPa angelegt. Das feste Produkt wird 30 Minuten auf 200 °C erhitzt, und das erhaltene rieselfähige Pulver wird gemahlen und 1 Stunde bei 800 °C in einem Luftstrom calciniert.

Der Y-Gehalt in dem calcinierten Pulver beträgt 5 Gewichtsprozent. Die EDX-Flächenspektren und EDX-Punktspektren zeigen im Rahmen der Analysengenauigkeit eine homogene Y-Verteilung im ZrO₂. Aus den elektronenmikroskopischen Aufnahmen (REM und STEM) ist ersichtlich, daß das Pulver aus annähernd gleich großen Kristalliten mit einem Durchmesser von 18 bis 25 nm besteht, die lockere, jedoch relativ dichte Agglomerate bilden. Der gemessene Kristallitdurchmesser wird durch Röntgenbeugungsaufnahmen bestätigt. Die Kristallite bestehen zu 100 % aus tetragonaler Phase. Die mit einem Quecksilberporosimeter untersuchte Porenstruktur zeigt eine annähernd bimodale Porenverteilung, bei der das erste Maximum bei 8 bis 10 nm und das zweite im µm-Bereich liegt. Die Oberfläche beträgt 16,2 m²/g.

### Beispiel 2

100,0 g ZrOCl₂ x 8H₂O, 5,13 g YCl₃ x 6H₂O und 8,08 g 2,2-Dimethylpropan-1,3-diol werden durch Mörsern gemischt und unter Rühren in einem Glaskolben aufgeschmolzen. Die Badtemperatur beträgt 140 °C. Die Schmelze wird 15 Minuten unter Rückfluß erhitzt und anschliessend durch Abdampfen von H₂O und HCl soweit engedickt bis sie hochviskos war. Die hochviskose Schmelze wird in einen Al₂O₃-Tiegel gegeben und in einem Ofen eine Stunde lang bei 600 °C in einem Luftstrom calciniert. Das calcinierte Pulver wird in einer Kugelmühle gemahlen und anschließend analysiert. Das Pulver besitzt zu 94 % eine tetragonale Phase und der Kristalldurchmesser beträgt laut Röntgenbeugungsspektrum 13 nm. Dies wird durch die STEM-Aufnahme bestätigt.

### Beispiel 3

200,0 g ZrOCl₂ x 8H₂O, 8.16 g YCl₃ x 6H₂O und 20,0 g 2,2-Dimethyl-propan-1,3-diol werden nach dem Mischen in einem Mörser in einem Glaskolben unter Rühren bei einer Badtemperatur von 140 °C aufgeschmolzen und eine Stunde unter Rückfluß bei dieser Temperatur gehalten. Anschließend werden 60 cm³ HCl-haltiges Wasser abdestilliert und das erhaltene Produkt in einem Al₂O₃-Tiegel zunächst eine Stunde bei 800 °C und dann eine Stunde bei 1000 °C in einem Luftstrom calciniert. Das erhaltene Pulver weist zu 93 % eine tetragonale Phase und zu 7 % eine monokline Phase auf. Aus den STEM-Aufnahmen ist eine Kristallitdicke von 40 bis 50 nm ersichtlich. Die Röntgenbeugungsaufnahmen ergeben einen mittleren Durchmesser der Kristallite von 46 nm. Die Agglomerate sind etwas härter, und im Dilatometer zeigt das Pulver ein geringfügig schlechteres Sinterverhalten.

### Beispiel 4

Der Versuch von Beispiel 1 wird mit einem Mengenverhältnis von ZrOCl₂ x 8H₂O : 2,2-Dimehtyl-propan-1,3-diol = 1 : 1 wiederholt. Das erhaltene Pulver besitzt ähnliche Eigenschaften wie das in Beispiel 1 beschriebene Produkt.

### Beispiele 5 und 6

Es werden in Analogie zu Beispiel 1 zwei Versuche durchgeführt, bei denen das Molmengenverhältnis von Zirkonsalz zu Diol 10 : 1 und 1 : 6 beträgt. In beiden Fällen werden im Vergleich zu dem Pulver des Beispiels 1 Produkte mit härteren Agglomeraten und etwas schlechterem Sinterverhalten hergestellt.

### Beispiel 7

100,0 g ZrOCl₂ x 8H₂O, 5,13 g YCl₃ x 6H₂O und 8,08 g 2,2-Dimethyl-propan-1,3-diol werden in einem Mörser innig gemischt und in einem Dreihalskolben unter Rühren bei einer Badtemperatur von 140 °C aufgeschmolzen und 15 Minuten unter Rückfluß weiter erhitzt. Nach dem Abdampfen von H₂O und HCl wird das Pulver auf 200 °C erhitzt und anschließend 16 Stunden bei 800 °C in einem Luftstrom calciniert. In dem erhaltenen Pulver kann mit Hilfe der Röntgenfluoreszenzanalyse kein Chlor nachgewiesen werden. Die REM-Aufnahmen zeigen in Abhängigkeit vom Mahlgrad Partikeln mit einem Durchmesser bis zu 10 µm, die laut STEM-Aufnahme aus Kristalliten mit einem Durchmesser von 15 bis 30 nm aufgebaut sind. Wie aus dem Dilatogramm ersichtlich ist, liegt das Sintermaximum des Pulvers bei 1134 °C.

### Beispiel 8

In einem Mörser werden 500,0 g ZrOCl₂ x 8H₂O, und 25,5 g YCl₃ x 6H₂O homogenisiert. Das Gemisch wird in einem Glaskolben unter Rühren aufgeschmolzen und 15 Minuten unter Rückfluß gehalten. Anschließend werden 40,4 g 2,2-Dimethyl-propan-1,3-diol hinzugegeben und die Temperatur von 140 °C auf 200 °C gesteigert. Das Abdampfen des H₂O und HCl wird kurz vor dem Trockenwerden des Pulvers durch Anlegen eines Vakuums von 4,5 kPa unterstützt. Das Produkt wird gemahlen, eine Stunde lange bei 800 °C in einem Luftstrom calciniert, durch Mahlen etwas zerkleinert und schließlich analysiert. Die Kristallitgröße beträgt 15 bis 20 nm. Im Dilatogramm zeigt das Pulver ein Sintermaximum bei 1 161 °C.

### Beispiel 9

Es wird eine Schmelze aus 100,0 g ZrOCl₂ x 6H₂O, und 25,5 g YCl₃ x 6H₂O hergestellt und 1 Stunde bei einer Badtemperatur von 140 °C unter Rückfluß erhitzt. Zu dieser Schmelze werden 8,08 g 2,2-Dimethyl-propan-1,3-diol hinzugegeben und die resultierende Schmelze für weitere 15 Minuten am Rückfluß erhitzt. Es bildet sich teilweise ein feiner weiß-gelblicher Niederschlag. Nach dem Abdampfen von H₂O und HCl, das gegen Ende des Verfahrensschrittes unter Vakuum durchgeführt wird, wird das erhaltene Produkt gemahlen und 1 Stunde bei 800 °C in einem Luftstrom calciniert. Aus den STEM-Aufnahmen ergibt sich ein Kristallitdurchmesser von ca. 20 nm. Das Sintermaximum wird bei 1 154 °C gefunden.

### Beispiel 10

Der Versuch von Beispiel 9 wird wiederholt. Die Schmelze wird jedoch 16 Stunden unter Rückfluß erhitzt. Sie hat ein milchigtrübes Aussehen. Die Kristallite des erhaltenen Pulvers besitzen einen Durchmesser von 30 bis 50 nm, und das Sintermaximum des Pulvers liegt bei 1 175 °C.

### Beispiel 11

100 g ZrOCl₂ x 8H₂O, 5,1 g YCl₃ x 6H₂O und 8,1 g 2,2-Dimethyl-propan-1,3-diol werden nach dem innigen Mischen aufgeschmolzen. In dem Maße, wie H₂O und HCl abdestillieren, wird frisches Wasser zudosiert. Nach 5 Stunden wird kein weiteres Wasser hinzugegeben und die Schmelze eingetrocknet. Nach einer Temperung bei 200 °C wird das Produkt 1 Stunde bei 800 °C in einem Luftstrom calciniert. Die Kristallite des Pulvers haben einen Durchmesser von ca. 25 nm und bestehen zu 100 % aus tetragonaler Phase.

### Beispiel 12

Es wird ein für die Calcinierung geeignetes Rohpulver hergestellt, wie es in Beispiel 1 beschrieben wird. Dieses Produkt wird in einem Luftstrom zunächst eine Stunde bei 400 °C und anschließend eine Stunde bei 600 °C calciniert. Das erhaltene Pulver besteht zu 100 % aus tetragonaler Phase. Die Kristallitdicke beträgt 23 nm.

### Beispiel 13

18,5 g Propan-1,2-diol, 78,3 g ZrOCl₂ x 8H₂O, und 3,2 g YCl₃ x 6H₂O werden unter Rühren aufgeschmolzen und 2 Stunden bei 140 °C unter Rückfluß erhitzt. Nach dem Abdestillieren von 28 g Salzsäure, einstündigem Calcinieren des erhaltenen Produktes in einem Luftstrom bei 800 °C und anschließendem Mahlen wird ein gut verpreßbares und sinterfähiges Pulver erhalten. Das Verhältnis der tetragonalen zu monoklinen Phase beträgt 95 : 5. Der Durchmesser der teragonalen Kristallite ist 23 nm.

### Beispiel 14

Der Versuch von Beispiel 13 wird wiederholt mit dem Unterschied, daß die Calcinierung in 2 Stufen durchgeführt wird. In der ersten Stufe wird das Produkt eine Stunde bei 500 °C in einem Argonstrom calciniert. Das gebildete Schwarze Pulver wird anschließend in einer zweiten Stufe 1 Stunde bei 800 °C in einem Luftstrom erhitzt. Das jetzt weiße Pulver läßt sich zu einer Tablette verpressen und sintern.

### Beispiel 15

ZrOCl₂ x 8H₂O, und Propan-1,2-diol werden in einem Molverhälnis 4 : 1 unter Zugabe von YCl₃ x 6H₂O (5 % Y₂O₃, bezogen auf ZrO₂), wie in Beispiel 13 beschrieben, zu ZrO₂-Pulver verarbeitet. Das erhaltene Produkt zeigt im Dilatogramm ein Sintermaximum bei 1 134 °C.

### Beispiel 16

Bei diesem Beispiel wird als Diol Ethan-1,2-diol verwendet. Die übrigen Bedingungen entsprechen denen von Beispiel 15. Das erhaltene Pulver besitzt eine Kristallitgröße von 28 nm. und der tetragonale Anteil beträgt 74 %. Das Sintermaximum liegt bei 1 172 °C.

### Beispiel 17

Der in Beispiel 13 beschriebene Versuch wird mit Butan-1,3-diol wiederholt. Es wird ein Pulver erhalten, das zu 90 % aus tetragonaler Phase besteht und ein Sintermaximum bei 1 268 °C besitzt.

### Beispiel 18

Es wird ein Pulver hergestellt, das als Stabilisator 12 Gewichtsprozent CeO₂ enthält. Die Herstellbedingungen entsprechen denen von Beispiel 1. Das gelbe Pulver besteht zu 100 % aus tetragonaler Phase. Die Kristallitgröße wird mit Hilfe der Röntgenbeugungsdiagramme zu 21 nm bestimmt.

### Beispiel 19

Der Versuch von Beispiel 1 wird ohne die Zugabe eines Stabilisators wiederholt. Es wird ein Pulver erhalten, das zu 98 % eine monokline Phase aufweist. Die Kristallitgröße beträgt 66 nm.

### Vergleichsbeispiel

100,0 g ZrOCl₂ x 8H₂O, und 5,2 g YCl₂ x 6H₂O werden ohne weitere Zusätze aufgeschmolzen und wie in Beispiel 1 beschrieben zu einem Pulver verarbeitet. Diese Produkt besteht aus harten Agglomeraten mit einem Durchmesser von 0,5 bis 1 µm, die sich nicht zu hochdichten Formkörpern verpressen und sintern lassen.

## Patentansprüche

1. Verfahren zur Herstellung von Zirkondioxidpulver,
dadurch gekennzeichnet,
daß man Zirkonylchlorid in Gegenwart eines Diols der allgemeinen Formel HO - X - OH, in der X einen gesättigten Kohlenwasserstoffgehalt mit 2 bis 5 Kohlenstoffatomen darstellt, aufschmilzt, die Schmelze durch Abdampfen von Wasser und Chlorwasserstoff eintrocknet, das Reaktionsprodukt bei erhöhter Temperatur in Gegenwart eines sauerstoffhaltigen Gases calciniert und gegebenenfalls den calcinierten Rückstand mahlt.

2. Verfahren nach Anspruch 1,
dadurch gekennzeichnet,
daß man der Umsetzung des Zirkonylchlorids einen Stabilisator in Form eines Precursors zusetzt.

3. Verfahren nach Anspruch 2,
dadurch gekennzeichnet,
daß man als Stabilisatorprecursor Yttrium- und/oder Cerchlorid zusetzt.

4. Verfahren nach Anspruch 1,
dadurch gekennzeichnet,
daß die Schmelze unter Rückfluß von Salzsäure getempert wird.

5. Verfahren nach den Ansprüchen 1 bis 4,
dadurch gekennzeichnet,
daß das Molverhältnis Zirkonylchlorid zu Diol 10 : 1 bis 1 : 10 beträgt.

6. Verfahren nach Anspruch 5,
dadurch gekennzeichnet,
daß das Molverhältnis Zirkonylchlorid zu Diol 1 : 1 bis 6 : 1 beträgt.

7. Verfahren nach Anspruch 6,
dadurch gekennzeichnet,
daß das Molverhältnis Zirkonylchlorid zu Diol 2 : 1 bis 5 : 1 beträgt.

8. Verfahren nach den Ansprüchen 1 bis 7,
dadurch gekennzeichnet,
daß die Calcinierung bei einer Temperatur von 600 bis 1 000 °C durchgeführt wird.

9. Verfahren nach Anspruch 8,
dadurch gekennzeichnet,
daß die Calcinierung bei einer Temperatur von 650 bis 800 °C durchgeführt wird.

10. Verfahren nach den Ansprüchen 1 bis 9,
dadurch gekennzeichnet,
daß man als sauerstoffhaltiges Gas Luft einsetzt.

## Claims

1. A method for the manufacture of zirconium dioxide powder,
characterized in that zirconyl chloride is melted in the presence of a diol having the general formula HO-X-OH, wherein X represents a saturated hydrocarbon radical comprising 2 to 5 carbon atoms, the molten mass is dried by evaporation of water and hydrogen chloride, the reaction product is calcined at a higher temperature in the presence of an oxygen-containing gas and optionally the calcined residue is milled.

2. A method according to claim 1, characterized in that a stabiliser in the form of a precursor is added to the zirconyl chloride conversion reaction mixture.

3. A method according to claim 2, characterized in that yttrium chloride and/or cerium chloride is added as a stabiliser precursor.

4. A method according to claim 1, characterized in that the molten mass is tempered under conditions in which hydrochloric acid is refluxed.

5. A method according to claims 1 to 4, characterized in that the molar ratio of zirconyl chloride to diol is in the range 10 : 1 to 1 : 10.

6. A method according to claim 5, characterized in that the molar ratio of zirconyl chloride to diol is in the range 1 : 1 to 6 : 1.

7. A method according to claim 6, characterized in that the molar ratio of zirconyl chloride to diol is in the range 2 : 1 to 5 : 1.

8. A method according to claims 1 to 7, characterized in that the calcining is performed at a temperature of 600 to 1,000°C.

9. A method according to claim 8, characterized in that the calcining is performed at a temperature of 650 to 800°C.

10. A method according to claims 1 to 9, characterized in that air is used as the oxygen-containing gas.

## Revendications

1. Procédé de fabrication de poudre de dioxyde de zirconium caractérisé en ce que l'on fait fondre le chlorure de zirconyle en présence d'un diol de formule générale
HO - X - OH
dans laquelle X représente un hydrocarbure saturé contenant de 2 à 5 atomes de carbone que l'on sèche complètement le matériau fondu par évaporation d'eau et d'acide chlorhydrique, que l'on calcine le produit réactionnel à température élevée, en présence d'un gaz contenant de l'oxygène, et que l'on broye le cas échéant le résidu calciné.

2. Procédé selon la revendication 1 caractérisé en ce que l'on ajoute au produit de conversion du chlorure de zirconyle, un stabilisateur sous forme d'un produit précurseur.

3. Procédé selon la revendication 2, caractérisé en ce que l'on ajoute comme précurseur d'agent de stabilisation, du chlorure d'yttrium et/ou de cérium.

4. Procédé selon la revendication 1 caractérisé en ce que le produit de fusion est recuit sous reflux d'acide chlorhydrique.

5. Procédé selon les revendications 1 à 4 caractérisé en ce que le rapport molaire chlorure de zirconyle au diol s'élève de 10 : 1 à 1 : 10.

6. Procédé selon la revendication 5 caractérisé en ce que le rapport molaire chlorure de zirconyle au diol s'élève de 1 : 1 à 6 : 1.

7. Procédé selon la revendication 6 caractérisé en ce que le rapport molaire chlorure de zirconyle au diol s'élève de 2 : 1 à 5 : 1.

8. Procédé selon les revendications 1 à 7 caractérisé en ce que l'on effectue la calcination à une température de 600 à 1 000 °C.

9. Procédé selon la revendication 8 caractérisé en ce que l'on effectue la calcination à une température allant de 650 à 800 °C.

10. Procédé selon les revendications 1 à 9 caractérisé en ce que l'on met en oeuvre de l'air, comme gaz contenant de l'oxygène.
